# EUROPEAN PATENT APPLICATION

(11) **EP 1 710 561 A1**
(43) Date of publication of application: **11.10.2006**
(21) Application number: 05023179.4
(22) Date of filing: 24.10.2005
(51) Int. Cl.: G01N 21/55

(54) **Biosensor system using spectral multiplexing**

(30) Priority: 05.04.2005 US 98890
(71) Applicant: Agilent Technologies, Inc. (a Delaware corporation), Palo Alto, California 94306-2024 (US)
(72) Inventor: Chow, Kai Cheung, Loveland, CO 80537-0599 (US); Gao, Lu, Loveland, CO 80537-0599 (US); Wang, Zheng, Loveland, CO 80537-0599 (US)
(74) Representative: Schoppe, Fritz

(57) **Abstract**

A biosensor (110) includes at least two sensors (112, 114) having different resonant frequencies. The different resonant frequencies of the sensors can be achieved by fabricating the sensors with different spatial profiles of regions (102, 104) of high and low dielectric constant. Because the sensors have different resonant frequencies, they can be monitored in parallel with little or no optical interference. The sensors can be monitored in parallel by simultaneously applying a swept optical signal to the sensors, where the wavelength range of the swept optical signal includes the resonant frequencies of both sensors. Because the sensors have different resonant frequencies, changes in the resonant frequencies of the two sensors can be monitored in parallel using a single detector (148).

## Description

### BACKGROUND OF THE INVENTION

Surface plasmon resonance (SPR) sensing is used to characterize binding between chemical or biological molecules. In one implementation of SPR, namely grating coupled SPR, the sensor has a resonant frequency that is established by fabricating a grating structure with periodic regions of high and low dielectric constant (ε).

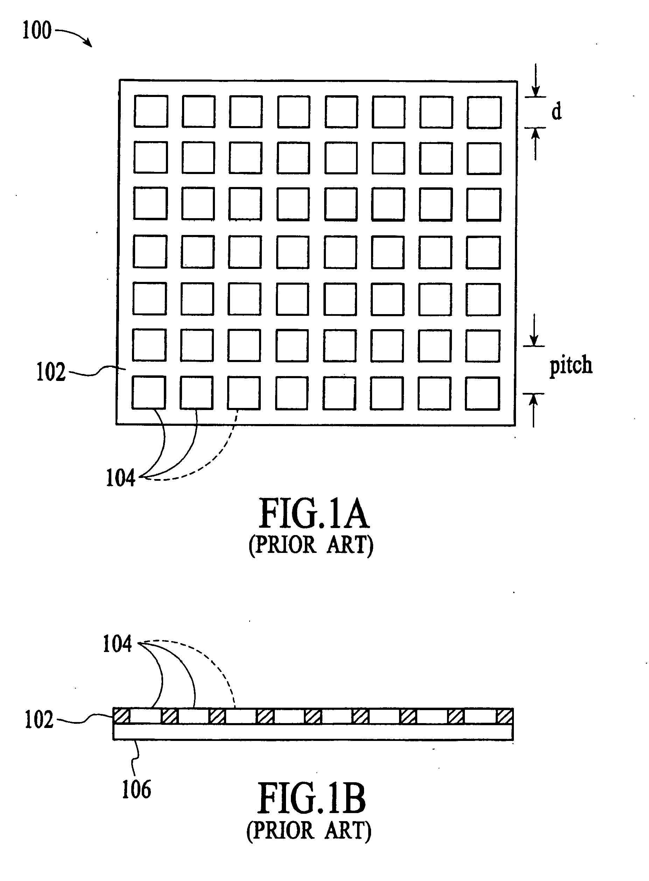

Fig. 1A depicts a top view of a single sensor 100 for use in grating coupled SPR sensing. The sensor 100 has a spatial profile that includes regions of high and low dielectric constant 102 and 104, where the spatial profile is the two-dimensional profile of the sensor's top surface. The regions of low dielectric constant are referred to as low dielectric constant features 104 and the remaining portion of the sensor is the region of high dielectric constant 102. The low dielectric constant features 104 are typically fabricated on the sensor 100 in a repeating pattern with each feature being essentially the same size and shape. The sensor 100 is formed on a substrate 106 such as a glass substrate and the region of high dielectric constant 102 is formed by a layer of gold. The regions of low dielectric constant 104 are typically square holes in the gold layer. Fig. 1B is a side view of the sensor that shows the substrate 106 and the regions of high and low dielectric constant 102 and 104. The square holes depicted in Figs. 1A and 1B are defined by a length dimension, d, and a pitch (also referred to as the lattice constant), a, where the pitch is the distance between the centers of adjacent features (e.g., the square holes). Biosensors such as the one depicted in Figs. 1A and 1B can be fabricated using various techniques including known semiconductor processing techniques such as optical lithography, imprint lithography, metal lift-off, and metal etching.

The throughput of sensing systems that utilize SPR is critical to achieving a commercially viable product.

### SUMMARY OF THE INVENTION

In accordance with the invention, a biosensor includes at least two sensors having different resonant frequencies. The different resonant frequencies of the sensors can be achieved by fabricating the sensors with different spatial profiles of regions of high and low dielectric constant. Because the sensors have different resonant frequencies, they can be monitored in parallel with little or no optical interference. Monitoring multiple sensors, which have different resonant frequencies, in parallel is referred to herein as "spectral multiplexing." The sensors can be monitored in parallel by simultaneously applying a swept optical signal to the sensors, where the wavelength range of the swept optical signal includes the resonant frequencies of both sensors. Because the sensors have different resonant frequencies, changes in the resonant frequencies of the two sensors can be monitored in parallel using a single detector.

Other aspects and advantages of the present invention will become apparent from the following detailed description, taken in conjunction with the accompanying drawings, illustrated by way of example of the principles of the invention.

### BRIEF DESCRIPTION OF THE DRAWINGS

Fig. 1A depicts a top view of a single sensor for use in SPR sensing as is known in the prior art.

Fig. 1B is a side view of the sensor from Fig. 1A.

Fig. 2 depicts an embodiment in accordance with the invention of a biosensor that has two sensors with different resonant frequencies.

Fig. 3 is a graph of reflectance vs. wavelength for the two sensors of Fig. 2, where the reflectance of the two sensors is measured in parallel by simultaneously applying a swept optical signal.

Fig. 4 depicts an embodiment in accordance with the invention of a biosensor that includes four distinct sensors, each having a different resonant frequency.

Fig. 5 is a high-level depiction of a reflective-type biosensor and a spectral multiplexing system that is configured for reflection.

Fig. 6 is an example of a spectral multiplexing system for use with a reflective-type biosensor.

Fig. 7 is a high-level depiction of a transmissive-type biosensor and a spectral multiplexing system that is configured for transmission.

Fig. 8 is an example of a spectral multiplexing system for use with a transmissive-type biosensor.

Fig. 9 depicts another example of a spectral multiplexing system for use with a transmissive-type biosensor.

Fig. 10 depicts a spectral multiplexing system and a reflection-type biosensor that use spectral multiplexing and spatial multiplexing to achieve sixteen-channel multiplexing.

Fig. 11 depicts a spectral multiplexing system and a transmissive-type biosensor that use spectral multiplexing and spatial multiplexing to achieve sixteen-channel multiplexing.

Fig. 12 depicts a process flow diagram of a method for characterizing the binding of biological molecules in accordance with the invention.

Throughout the description similar reference numbers may be used to identify similar elements.

### DETAILED DESCRIPTION

Many aspects of a sensor's design affect the resonant frequency of the sensor. For example, the resonant frequency of a sensor can be affected by the substrate composition and thickness, the composition and thickness of the high dielectric constant region, the composition and thickness of the low dielectric constant features, the size and shape of the low dielectric constant features, the pattern symmetry (e.g., square or hexagon) of the low dielectric constant features, and the pitch of the low dielectric constant features. The resonant frequency of a sensor can be changed by changing the spatial profile of the regions of high and low dielectric constant. For example, changing only one aspect of a sensor's spatial profile, such as the size or pitch of the low dielectric constant features, will change the resonant frequency of the sensor.

In accordance with the invention, a biosensor includes at least two sensors having different resonant frequencies. The different resonant frequencies of the sensors can be achieved by fabricating the sensors with different spatial profiles of regions of high and low dielectric constant. Because the sensors have different resonant frequencies, they can be monitored in parallel with little or no optical interference. Monitoring multiple sensors, which have different resonant frequencies, in parallel is referred to herein as "spectral multiplexing." In an embodiment in accordance with the invention, the sensors are monitored in parallel by simultaneously applying a swept optical signal to the sensors, where the wavelength range of the swept optical signal includes the resonant frequencies of both sensors and detecting the swept optical signal with a single detector after the swept optical signal has interacted with the sensors. In biosensing applications, changes in the resonant frequencies of the two sensors are monitored to characterize binding between molecules at the sensors.

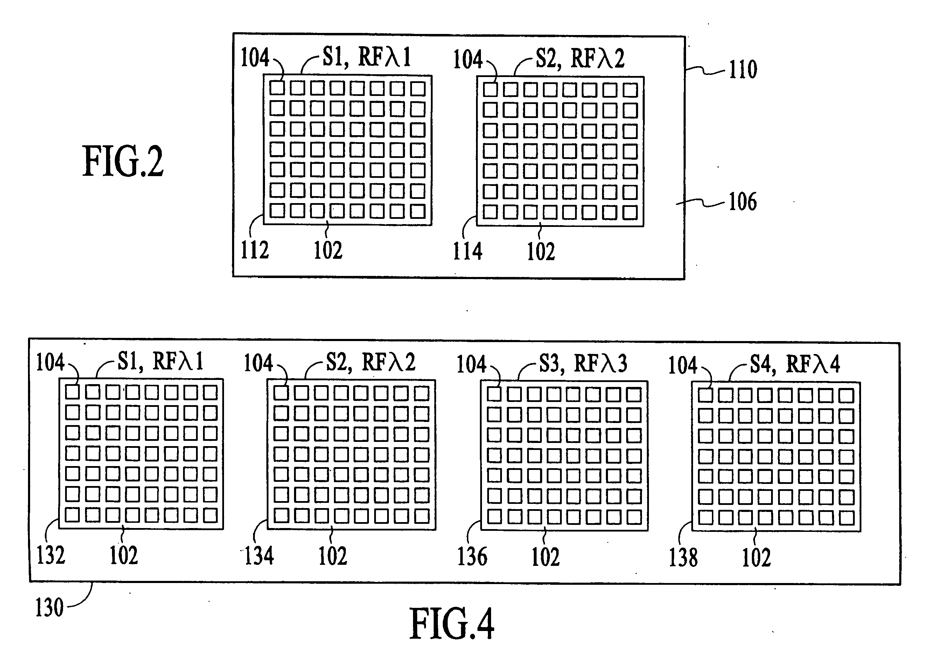

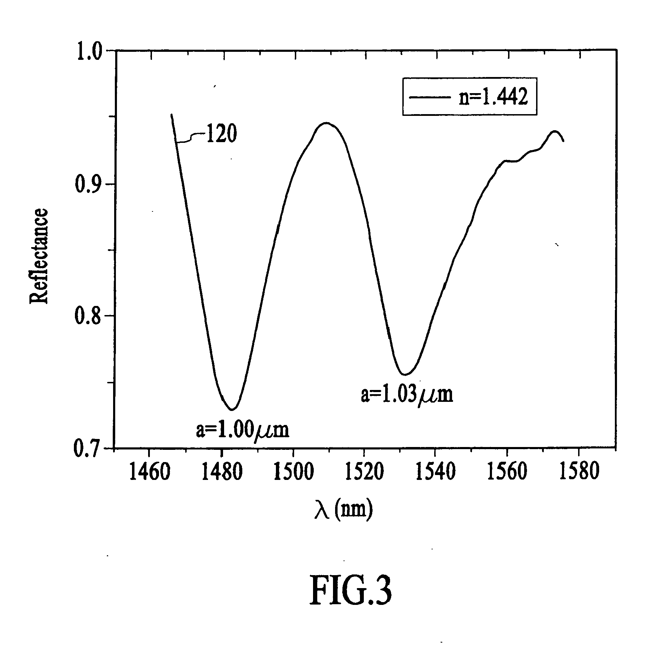

Fig. 2 depicts an embodiment in accordance with the invention of a biosensor 110 that has two sensors 112 and 114 with different resonant frequencies. The first sensor, S1, 112 has a first resonant frequency, RF_{λ1}, and the second sensor, S2, 114 has a second resonant frequency, RF_{λ2}. In the example of Fig. 2, the resonant frequencies of the two sensors 112 and 114 are made different by fabricating the square holes 104 at different pitches. For example, the pitch of the square holes in the first sensor is 1,000nm (a = 1.00um) and the pitch of the square holes in the second sensor is 1,030nm (a = 1.03um). Fig. 3 is a graph of reflectance vs. wavelength for the two sensors of Fig. 2, where the reflectance of the two sensors is measured in parallel by simultaneously applying a swept optical signal from a tunable laser source and detecting the swept optical signal with a single detector. As depicted in Fig. 3, the reflectance spectrums 120 of the two sensors are spectrally spaced such that the resonant frequencies of the two sensors can readily be distinguished from each other. The spectral spacing between the resonance spectrums 120 of the two sensors can be narrower as long as the resonant frequencies can still be distinguished.

In the embodiment of Fig. 2, the low dielectric constant features 104 are typically fabricated on the sensor 100 in a repeating pattern with each feature being essentially the same size and shape. The low dielectric constant features can be any shape, including square, elliptical, or circular. The repeating pattern of features can be, for example, a square matrix or a hexagonal matrix. Although a repeating pattern of low dielectric constant features is described herein, a spatial profile with a random pattern of high and low dielectric constant regions is also possible. In the example of Fig. 2, the sensors 112 and 114 of the biosensor 110 are formed on a single substrate 106 such as a glass substrate and the region of high dielectric constant 102 is formed by a layer of gold, for example, a layer of gold with a thickness in the range of 20 - 200nm. The square holes depicted in Fig. 2 are defined by a length dimension, d, and a pitch (also referred to as the lattice constant), a, where the pitch is the distance between the centers of adjacent features (e.g., the square holes). In the example of Fig. 2, the sensor is approximately 30 um x 30 um and the length distance of the square holes ranges from 100nm - 600nm with a pitch of between 1,000 - 1,100 nm. In the example of Fig. 2, the square holes 104 are filled with air. That is, the holes are simply voids in the gold layer 102. Alternatively, the low dielectric constant features may consist of a solid material with a low dielectric constant that is filled in the void areas. In an alternative embodiment, the sensors 112 and 114 of the biosensor 110 are formed on separate substrates.

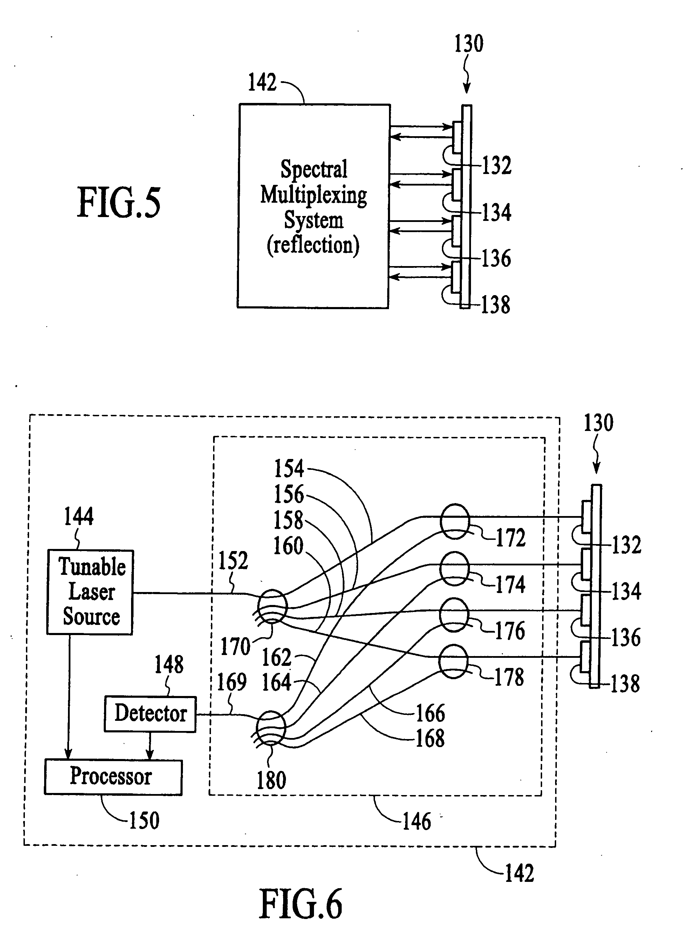

Although the biosensor 110 described with reference to Fig. 2 has only two sensors 112 and 114 with different resonant frequencies, a biosensor with more than two sensors having different resonant frequencies can be fabricated onto the same substrate. Fig. 4 depicts an embodiment in accordance with the invention of a biosensor 130 that includes four distinct sensors, S1 132, S2 134, S3 136, and S4 138, each having a different resonant frequency. In the biosensor of Fig. 4, sensor S1 has a resonant frequency RF_{λ1}, sensor S2 has a resonant frequency RF_{λ2}, sensor S3 has a resonant frequency RF_{λ3}, and sensor S4 has a resonant frequency RF_{λ4}. The different resonant frequencies can be achieved, for example, by fabricating the low dielectric constant features 104 of the sensors at different pitches.

In general, the biosensors 110 and 130 described with reference to Figs. 1A - 4 can be designed to work in reflection or transmission. If the biosensors are designed to work in reflection, the resonant frequency is identified by a dip or minimum in the reflection spectrum. If the biosensors are designed to work in transmission, the resonant frequency is identified by a peak or maximum in the transmission spectrum.

To achieve spectral multiplexing using a biosensor as described above with reference to Figs. 1A - 4, there needs to be an optical signal, a way to apply the optical signal to the sensors, and a way to detect the portions of the optical signal that are either reflected or transmitted to identify changes in the resonant frequencies of the sensors. Fig. 5 is a high-level depiction of a reflective-type biosensor 130 and a spectral multiplexing system 142 that is configured for reflection. The basic functions of the spectral multiplexing system include; 1) providing an optical signal that includes the resonant frequencies of the sensors, 2) delivering the optical signal to the sensors, 3) collecting the portions of the optical signal that are reflected by the sensors 132 - 138, and 4) detecting the reflected portions of the optical signal. There are many configurations of the spectral multiplexing system that can be used to provide the above-described functions and the exact configuration is not critical to the invention as long as the above-described functions are provided.

One example of a spectral multiplexing system 142 for use with a reflective-type biosensor 130 is depicted in Fig. 6. The spectral multiplexing system 142 of Fig. 6 includes a tunable laser source 144, an optical fiber based distribution and collection system 146, a detector 148, and a processor 150. In operation, a capture agent is applied to the sensors 132, 134, 136, and 138. Techniques for applying capture agents to the sensors are known in the field and are not described further herein. Once the capture agents are applied to the sensors, the capture agents are exposed to an analyte (or analytes). Techniques for exposing the capture agents to an analyte are known in the field and are not described further herein. To monitor bindings at the sensors 132 - 138 between the capture agents and the analytes, the tunable laser source 144 generates an optical signal that is swept across a range of wavelengths, where the range of wavelengths includes the resonant frequencies of the four sensors. The swept optical signal is distributed in parallel to the sensors 132 - 138 via the optical fiber distribution and collection system 146, which includes fibers 152, 154, 156, 158, 160, 162, 164, 166, 168, and 169 and couplers 170, 172, 174, 176, 178, and 180. In the embodiment of Fig. 6, the optical signal is provided simultaneously to the sensors 132 - 138. As the optical signal sweeps across a range of wavelengths, the sensors 132 - 138 absorb optical energy that is at the resonant frequencies of the sensors. Portions of the swept optical signal that are reflected by the sensors 132 - 138 are collected and delivered to the detector 148 by fibers 162, 164, 166, 168, and 169 and couplers 172, 174, 176, 178, and 180. The detector 148 measures the optical intensity of the collected optical signal and delivers intensity information to the processor 150. The processor 150 receives wavelength information from the tunable laser source 144 and the intensity information from the detector 148 and uses the information to generate intensity vs. wavelength information. The intensity vs. wavelength information is used to identify shifts in the resonant frequencies of the sensors 132 - 138 that result from bindings of molecules at the sensors. Shifts in the resonant frequencies of the sensors 132 - 138 and knowledge of the sensor/resonant frequency relationship are used to identify the binding of molecules at the sensors.

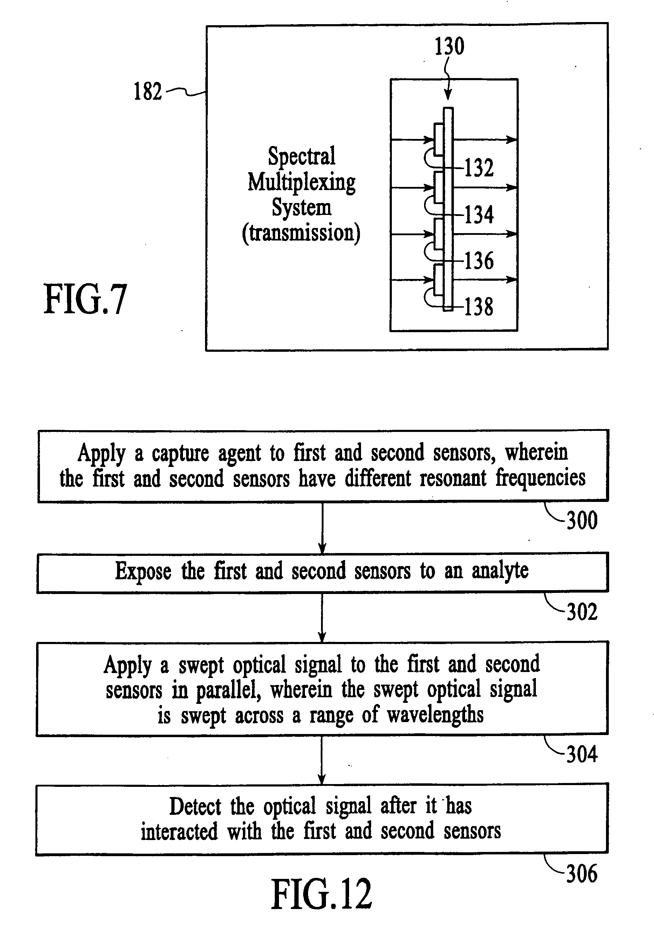

Fig. 7 is a high-level depiction of a transmissive-type biosensor 130 and a spectral multiplexing system 182 that is configured for transmission. The basic functions of the spectral multiplexing system include; 1) providing an optical signal that includes the resonant frequencies of the sensors, 2) delivering the optical signal to the sensors 132 - 138, 3) collecting the portions of the optical signal that pass through the sensors, and 4) detecting the passed portions of the optical signal. There are many configurations of the spectral multiplexing system that can be used to provide the above-described functions and the exact configuration is not critical to the invention as long as the above-described functions are provided.

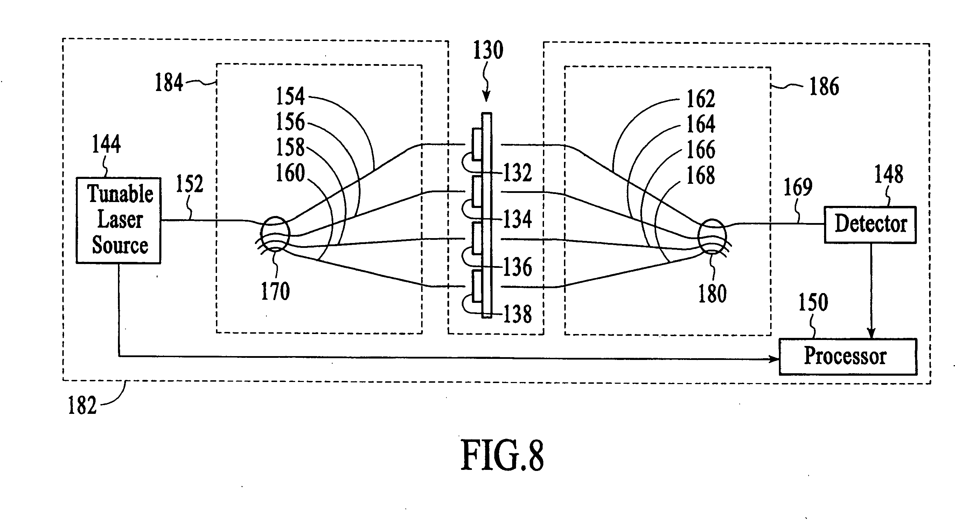

One example of a spectral multiplexing system 182 for use with a transmissive-type biosensor is depicted in Fig. 8. The spectral multiplexing system 182 of Fig. 8 includes a tunable laser source 144, an optical fiber based distribution system 184, an optical fiber based collection system 186, a detector 148, and a processor 150. In operation, the binding agents and analytes are exposed to each other at the sensors 132 - 138 using known techniques. To monitor bindings at the sensors 132 - 138, the tunable laser source 144 generates an optical signal that is swept across a range of wavelengths, where the range of wavelengths includes the resonant frequencies of the four sensors 132 - 138. The swept optical signal is distributed in parallel to the sensors 132 - 138 via the optical fiber based distribution system 184, which includes fibers 152, 154, 156, 158, and 160 and coupler 170. As the optical signal sweeps across a range of wavelengths, the sensors 132 - 138 pass optical energy that is at the resonant frequencies of the sensors. Portions of the swept optical signal that pass through the sensors 132 - 138 are collected by the optical fiber based collection system 186, which includes fibers 162, 164, 166, 168, and 169 and coupler 180. The collected portions of the optical signal are provided to the detector 148. The detector 148 measures the optical intensity of the collected optical signal and delivers intensity information to the processor 150. The processor 150 receives wavelength information from the tunable laser source 144 and the intensity information from the detector 148 and uses the information to generate intensity vs. wavelength information. The intensity vs. wavelength information is used to identify shifts in the resonant frequencies of the sensors 132 - 138 and the shifts in the resonant frequencies of the sensors and knowledge of the sensor/resonant frequency relationship are used to identify binding of molecules at the sensors.

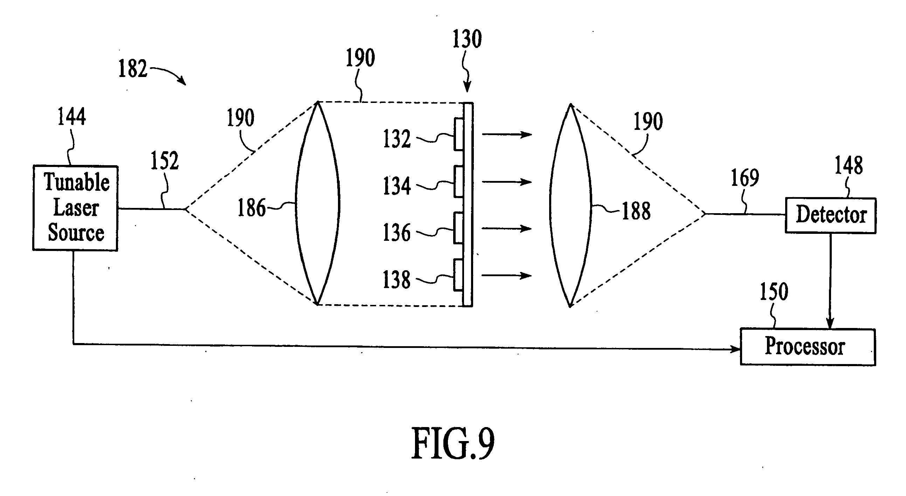

Fig. 9 depicts another example of a spectral multiplexing system 182 for use with a transmissive-type biosensor 130. The spectral multiplexing system includes a tunable laser source 144, a distribution fiber 152, a distribution lens 186, a collection lens 188, a collection fiber 169, a detector 148, and a processor 150. In operation, the tunable laser source 144 generates an optical signal that is swept across a range of wavelengths, where the range of wavelengths includes the resonant frequencies of the four sensors 132 - 138. The swept optical signal is incident on the distribution lens 186. The distribution lens 186 directs the cross-section of the optical signal beam 190 so that the beam covers all of the sensors 132 - 138 at once. As the optical signal sweeps across a range of wavelengths, the sensors 132 - 138 pass optical energy that is at the resonant frequencies of the sensors. Portions of the swept optical signal that pass through the sensors 132 - 138 are incident on the collection lens 188. The collection lens 188 focuses the beam 190 so that it can be coupled into an optical fiber 169 and delivered to the detector 148. The detector measures the optical intensity of the collected optical signal and delivers intensity information to the processor 150. The processor receives wavelength information from the tunable laser source 144 and the intensity information from the detector 148 and uses the information to generate intensity vs. wavelength information. The intensity vs. wavelength information is used to identify shifts in the resonant frequencies of the sensors and shifts in the resonant frequencies of the sensors and knowledge of the sensor/resonant frequency relationship are used to identify binding of molecules at the sensors.

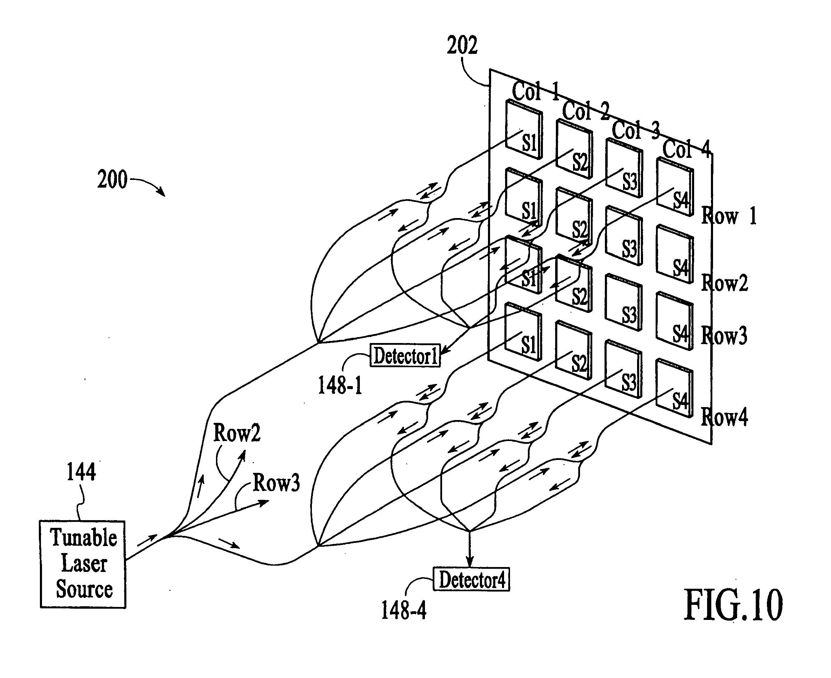

Although some examples of spectral multiplexing systems are described with reference to Figs. 5 - 9, other configurations are possible. In one alternative configuration, the light source provides a broadband optical signal that includes optical energy at the resonant frequencies of all of the sensors and the detector is an optical spectrum analyzer (OSA). In another alternative configuration, spectral multiplexing can be combined with spatial multiplexing to increase the number or detection channels that are available. Fig. 10 depicts an example of a spectral multiplexing system 200 and a reflective-type biosensor 202 that use spectral multiplexing and spatial multiplexing to achieve sixteen-channel multiplexing. In the example of Fig. 10, the sensors S1, S2, S3, and S4 are configured in a 4x4 matrix of sensors, with the sensors in each row having different resonant frequencies (RF_{λ1}, RF_{λ2}, RF_{λ3}, and RF_{λ4}) and the sensors in each column having the same resonant frequency (column 1:RF_{λ1}, column 2:RF_{λ2}, column 3:RF_{λ3}, and column 4:RF_{λ4}). The distribution, collection, and detection systems for row 2 and row 3 also exist but are not shown in Fig. 10 for simplicity. The spectral multiplexing system of Fig. 10 is similar to the spectral multiplexing system of Fig. 6 except that it includes three additional rows of sensors each with its own row-specific detector (148-1...148-4).

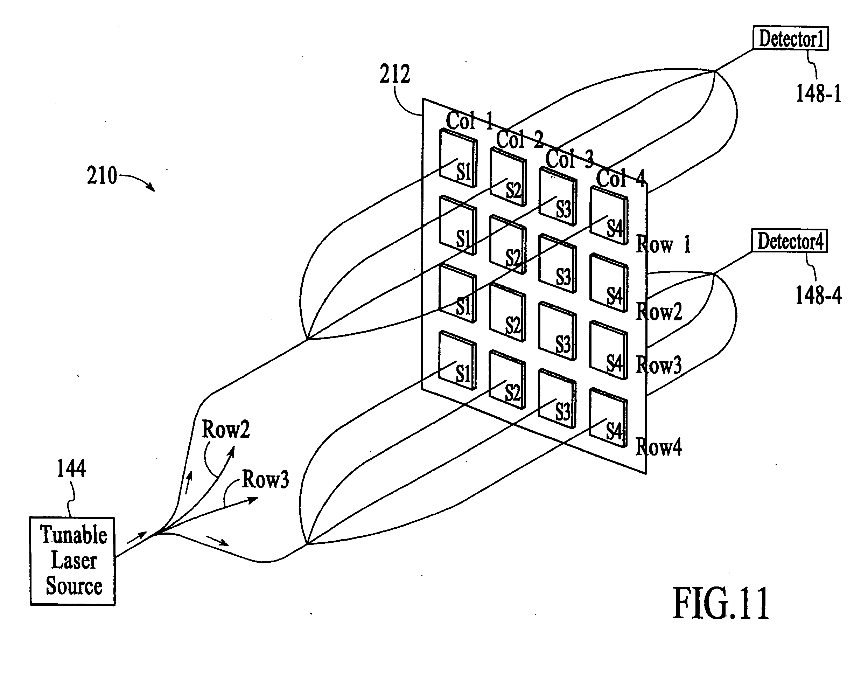

Fig. 11 depicts an example of a spectral multiplexing system 210 and a transmissive-type biosensor 212 that use spectral multiplexing and spatial multiplexing to achieve sixteen-channel multiplexing. The spectral multiplexing system of Fig. 11 is similar to the spectral multiplexing system of Fig. 8 except that it includes three additional rows of sensors. Again in Fig. 11, the distribution, collection, and detection systems for row 2 and row 3 are not shown for simplicity.

Fig. 12 depicts a process flow diagram of a method for characterizing the binding of biological molecules in accordance with the invention. At block 300, a capture agent is applied to first and second sensors, wherein the first and second sensors have different resonant frequencies. At block 302, the first and second sensors are exposed to an analyte. At block 304, an optical signal is applied to the first and second sensors in parallel. At block 306, the optical signal is detected after it has interacted with the first and second sensors.

Some limiting factors that dictate the maximum number of sensors with different resonant frequencies that can be used in parallel include the wavelength range of the source that provides the optical signal to the sensors and the Q-factor of the sensors, where the Q-factor is defined as the resonant wavelength divided by the reflectance at full-width half-maximum (FWHM). Having sensors with higher Q-factors (i.e., narrower spectral profiles) allows more distinguishable channels to be fit into the available wavelength range.

Implementing spectral multiplexing with a biosensor that has sensors with different resonant frequencies, enables binding events to be monitored at multiple different sensor locations using a single biosensor structure. Multiple sensors having different resonant frequencies can be easily fabricated on the same substrate in a single process using known fabrication techniques.

An advantage of the spectral multiplexing systems described with reference to Figs. 6, 8, and 9 is that spectral multiplexing is accomplished with a single optical signal source and a single detector. Although the spectral multiplexing systems of Figs. 10 and 11 require multiple detectors, the number of detectors is reduced using spectral multiplexing as disclosed herein.

Because the resonant frequency of each sensor is known, the detected spectrum information is essentially encoded with sensor location information. That is, the sensor/resonant frequency relationships can be used to associate spectrum information with specific sensor locations.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A biosensor comprising:
a first sensor (112), the first sensor having a spatial profile of regions (102, 104) of high and low dielectric constant that results in a first resonant frequency; and
a second sensor (114), the second sensor having a spatial profile of regions of high and low dielectric constant that results in a second resonant frequency;
wherein the first resonant frequency is different from second resonant frequency.

2. The biosensor of claim 1 wherein the first and second sensors (112, 114) are fabricated on the same substrate (106).

3. The biosensor of claim 1 wherein the spatial profiles of the first and second sensors (112, 114) include patterns of low dielectric constant features (104).

4. The biosensor of claim 3 wherein the low dielectric constant features (104) of the two sensors (112, 114) are at a different pitch.

5. The biosensor of claim 1 wherein an aspect of the spatial profile of the first sensor (112) is different from the same aspect of the spatial profile of the second sensor (114).

6. The biosensor of claim 1 further comprising a spectral multiplexing system (142; 182) in optical communication with the first and second sensors (112, 114) configured to enable parallel detection of an optical signal that interacts with the first and second sensors.

7. The biosensor of claim 1 further comprising a spectral multiplexing system (142; 182) in optical communication with the first and second sensors, the spectral multiplexing system having a source (144) of a swept optical signal configured to provide the swept optical signal to the first and second sensors and a detector (148) configured to detect portions of the optical signal that interact with the first and second sensors.

8. A method for characterizing the binding of biological molecules comprising:
applying (300) a capture agent to first and second sensors (112, 114), wherein the first and second sensors have different resonant frequencies;
exposing (302) the first and second sensors to an analyte;
applying (304) an optical signal to the first and second sensors in parallel; and
detecting (306) the optical signal after it has interacted with the first and second sensors.

9. The method of claim 8 further including monitoring shifts in the resonant frequencies associated with the first and second sensors (112, 114).

10. The method of claim 8 wherein the detecting comprises detecting the optical signal from the first and second sensors (112, 114) with the same optical detector (148).
